Europäisches Patentamt

European Patent Office

Office européen des brevets

(1) Publication number: **0 206 827**
**B1**

# EUROPEAN PATENT SPECIFICATION

(45) Date of publication of patent specification: **23.01.91**

(51) Int. Cl.⁵: **A 23 N 12/08,** A 23 N 12/12

(21) Application number: **86304941.7**

(22) Date of filing: **25.06.86**

(54) **Coffee roaster.**

(30) Priority: **25.06.85 JP 95085/85 u**
**25.12.85 JP 202172/85 u**

(43) Date of publication of application:
**30.12.86 Bulletin 86/52**

(45) Publication of the grant of the patent:
**23.01.91 Bulletin 91/04**

(84) Designated Contracting States:
**DE FR GB IT NL**

(56) References cited:
**EP-A-0 143 646**
**DE-A-3 010 558**
**GB-A- 805 090**
**GB-A-1 042 432**

(73) Proprietor: **SANDEN CORPORATION**
**20 Kotobuki-cho**
**Isesaki-shi Gunma-ken (JP)**

(72) Inventor: **Igusa, Masaru**
**400 Shinbo-machi**
**Takasaki-shi Gunma, 370 (JP)**
Inventor: **Chiba, Takashi**
**112-6 Kita-machi**
**Isesaki-shi Gunma, 372 (JP)**

(74) Representative: **Jackson, Peter Arthur et al**
**Gill Jennings & Every, 53-64 Chancery Lane**
**London WC2A 1HN (GB)**

## Description

This invention relates to coffee roasters, and more particularly, to a control device for a heater element utilized in the roaster and to an air flow control circuit used to regulate the speed of rotation of a fan used to circulate air.

Presently, there are two methods of roasting coffee, a hot blast method and a radiated heat method. Irrespective of which method is used in a roaster, the coffee beans should be roasted within a very short time period to maintain the smell and flavour of the coffee. Therefore, a heater element with a large power output is used in a roaster for roasting quickly the coffee beans. However, a coffee roaster is generally not provided with a device for controlling the power output of the heater element. Thus, the degree of roasting of the coffee beans is not controllable via the heater element. Also, if the temperature in a roaster is abnormally high, the outer skin of the coffee beans is burned. As a result of burning the skin of the beans, the roaster itself is usually damaged by the heat.

Roasters usually have a device for ensuring uniform roasting of the coffee beans (for example, a stirring element). Also, a roaster may have a blower device (e.g. a fan) to blow air into the roaster. Thus, heat is uniformly given to the coffee beans as a result of air circulation caused by the blower device. However, the power output of the heater element is proportional to the power source voltage, but the mass flow rate of air moved by the blower device into the roaster is not influenced by changes in the level of the power source voltage. Therefore, the rate of heat transfer to the coffee beans is changed. As a result of the changes in the heat transfer value, the conditions of roasting are varied and it is very difficult to control satisfactorily the operation of roasting the coffee beans.

In EP-A-0143646, a coffee roasting apparatus is disclosed comprising a container for holding coffee beans during a roasting operation, a heater element for roasting the coffee beans, a fan for circulating air within the container, a control device for reducing the power output of the heater element when, in use, the beans have been raised to a roasting temperature.

In accordance with the present invention, such an apparatus is characterised in that the control device comprises a selector switch arranged to switch between a pair of parallel connected resistors, a capacitor connected to a trigger element and to the ends of the resistors remote from the selector switch and a switching element controlled by the trigger element.

Preferably, the control device is arranged to effect the reduction in heater element power output a predetermined period of time after the start of the roasting operation.

Other preferred embodiments of the invention are set out in the dependent claims.

The invention will now be described by way of example with reference to the following drawings, in which:-

Figure 1 is an axial section of the main portion of a roasting apparatus;

Figure 2 is electrical circuit of a heater element control device in accordance with the first aspect of the present invention for use with the roasting apparatus of Figure 1;

Figure 3 is a series of graphs illustrating the operation of the control device shown in Figure 2;

Figure 4 is a series of graphs illustrating the effect of the control device on the temperature in the roaster and the power output of the heater element;

Figure 5 is a block diagram of an air flow control circuit in accordance with the second aspect of the present invention for use with a roasting apparatus of the type shown in Figure 1;

Figure 6 is a graph illustrating the relationship between signals used in the control circuit of Figure 5 and the voltage of a power source; and,

Figure 7 is a graph illustrating the effect of variations in the power source voltage on the power output of the heater element and on the rate of extraction of waste heat by air moved by a fan whose speed is controlled by the air flow control circuit of Figure 5.

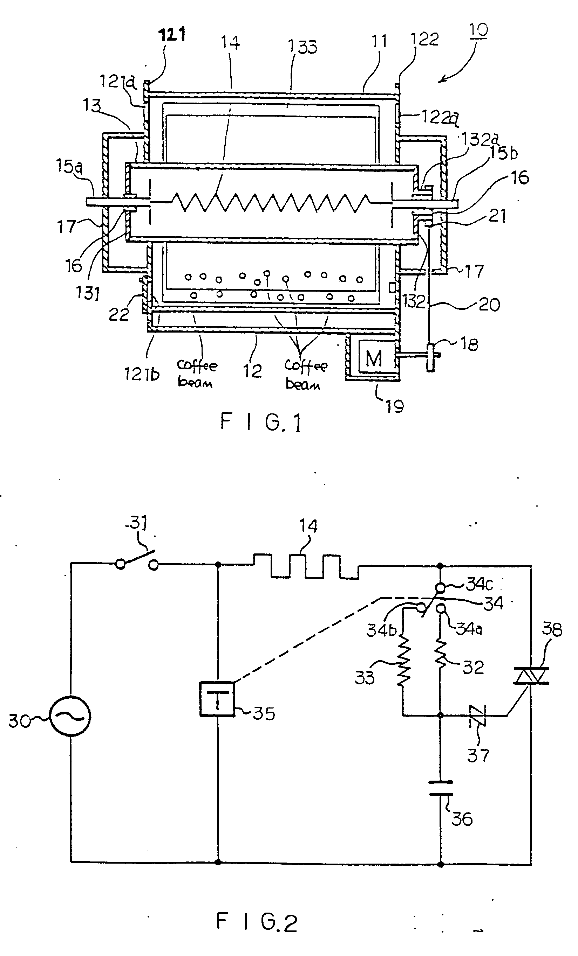

Figure 1 shows a coffee roasting apparatus 10 which is provided with a heater control device in accordance with the first aspect of the present invention. The roasting apparatus 10 comprises a cylindrical container 11 functioning as a roasting drum, a support frame 12 and a cylindrical drum 13 in which a heater element 14 is disposed.

The cylindrical container 11 is formed of transparent, heat-resistant material (e.g. a glass material), and both of its ends are covered by a respective end plate 121, 122 of the support frame 12. The cylindrical drum 13, which is formed of a porous material (e.g. wire netting), is mounted horizontally along the axis of the cylindrical container 11 and protrudes out through both end plates 121, 122. A plurality of blades 133 project radially outwards from the outer surface of the drum 13 and rotate together with it and extend out to almost the inner surface of the container 11. Both end openings of the drum 13 are covered by closed plates 131, 132, each of which is rotatably supported on a respective one of a pair of fixed shafts 15a, 15b through a bearing 16. Each fixed shaft 15a, 15b is held by a secondary support frame 17 attached to an end surface of a respective one of the end plates 121, 122. The heater element 14 extends between the two fixed shafts 15a, 15b. An axial boss 132a is formed on an end surface of the end plate 132 around the fixed shaft 15b. A sprocket 21 is attached to the boss 132a and is connected via an endless chain 20 to a sprocket 18 mounted on a drive shaft of a drive motor 19. In this way, the drum 13 may be rotated within the container 11.

Coffee beans pass into the container 11 through a hole 121a which is formed through one of the end plates 121 and serves as an outlet hole for a hot air blast. A coffee bean discharge hole 121b is formed in the end plate 121 and its opening and closing is controlled by a control plate 22 pivotally fastened on the end plate 121. Thus, roasted coffee beans may be discharged from the container 11 through the hole 121b. Furthermore, an air inlet hole 122a is formed through the end plate 122, and a blower duct (not shown) in which a blower fan 23 (see Figure 5) is disposed is connected to the air inlet hole 122a to promote the circulation of the hot air within the container 11.

Referring to Figure 2, the control device for the heater element 14 will now be described. One end of the heater element 14 is connected to an A.C. power source 30 through a main switch 31. The other end is connected to a parallel connected pair of resistors 32, 33 through a single-pole double-throw type selector switch 34, which is controlled by a timer 35 as described more fully below. The resistor 32 has a resistance chosen to produce a high power output operating mode of the heater element 14. The resistor 33 has a larger resistance than that of the resistor 32. Both resistors 32, 33 are connected to a capacitor 36, from which charge is discharged when the voltage across the capacitor 36 exceeds a predetermined value. The connection between the resistors 32, 33 and the capacitor 36 is also connected to a trigger element 37 (for example, a Silicon Bidirectional Switch), which generates trigger pulses to allow the discharge of the capacitor 36. The operation of the trigger element 37 is more fully described below.

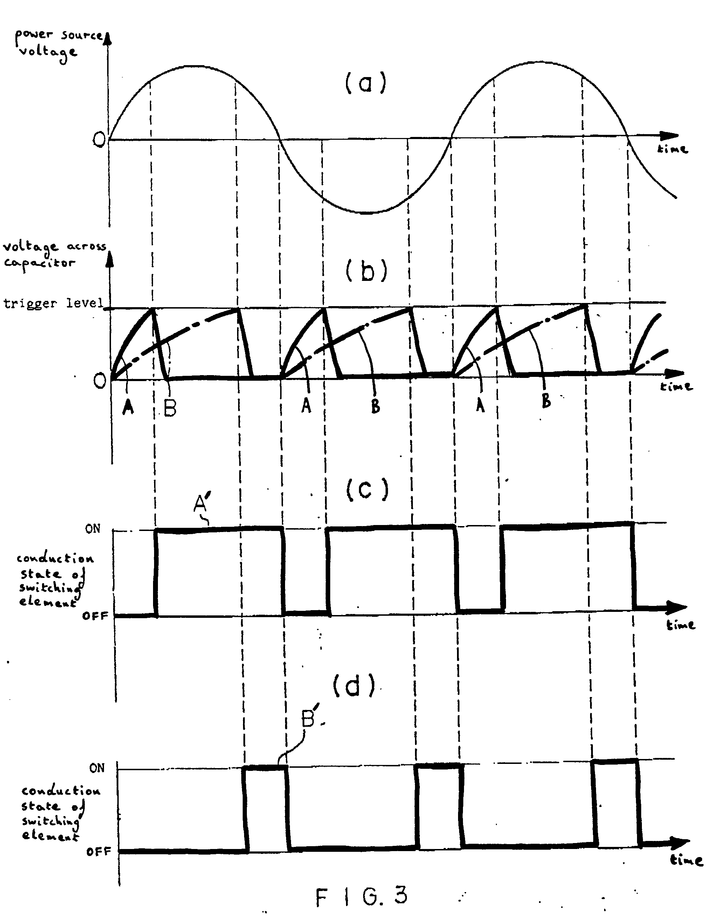

The other end of the heater element 14 is also connected to an A.C. switching element 38 (for example, a TRIAC) which is repeatedly energized by the input of trigger pulses from the trigger element 37 and deenergized when the voltage of the A.C. voltage waveform (shown in Figure 3(a)) is zero.

A first terminal 34a of the selector switch 34 is connected to the resistor 32, a second terminal 34b is connected to the resistor 33 and a main terminal 34c is connected to the heater element 14. The selector switch 34 normally has the first terminal 34a and the main terminal 34c connected. Changing over to connect the second terminal 34b and the main terminal 34c is effected by the timer 35. In this example, the timer 35 changes over the connections of the selector switch 34 after a predetermined time period (for example, ten minutes after the closing of the main switch 31).

With the above construction of coffee roaster, the roasting operation of the roaster is started by energizing the motor 19 to rotate the cylindrical drum 13 and the heater element 14 to heat the roasting drum 11. This is known as a pilot roasting operation. After the temperature in the roasting drum 11 has risen to a predetermined value, coffee beans are allowed to pass into the interior of the cylindrical container 11 through the hole 121a. Then the coffee beans are roasted by the action of the heater element 14, and uniform roasting is achieved with the aid of the rotating blades 133. Once the beans have been roasted sufficiently, the motor 18 and the heater element 14 are deenergized, and the roasted coffee beans are discharged through the hole 121b.

Referring to Figure 3, the operation of the timer 35 and the trigger element 37 will now be described. If the main switch 31 is turned ON to close the circuit, the first terminal 34a of the selector switch 34 is connected to the main terminal 34c to supply electric current to the resistor 32 and the capacitor 36. As has already been mentioned, the resistance of the resistor 32 is selected to be smaller than that of the resistor 33, and therefore the voltage across the capacitor 36 can rise quickly to the predetermined value, such as, in this example, the trigger level of the trigger element 37 (the voltage across the capacitor is shown by curve A in Figure 3(b)). After the trigger level has been reached, the resulting trigger pulse allows the element 38 to conduct and the capacitor 36 to discharge through the resistor 32 and element 38. The discharging operation is completed by the time the A.C. voltage waveform has reached zero (see Figures 3(a) and (b)), at which point the switching element 38 stops conducting. The state of conduction of the switching element 38 is shown by curve A' in Figure 3(c). Thus, for a large period of the time, a large current is allowed to flow through the heater element 14, this being the high power output operating mode.

After the expiry of the predetermined time period (e.g. ten minutes from closure of the main switch 31), the switch 34 is switched under the control of the timer 35. That is the main terminal 34c is connected to the second terminal 34b, and current must now flow to the capacitor 36 through the resistor 33. The resistance of the resistor 33 is chosen to be larger than that of the resistor 32, and, therefore, the voltage across the capacitor 36 builds up more slowly than was previously the case and takes longer to reach the trigger level of the trigger element 37 (the voltage across the capacitor 36 is shown by curve B in Figure 3(b)). After the trigger level has been reached, the trigger pulse produced by the trigger element 37 allows the switching element 38 to conduct, and the capacitor 36 then discharges. This discharge operation is completed by the time the A.C. voltage waveform reaches zero. The conduction state of the switching element 38 is shown by curve B' in Figure 3(d). Thus, for a smaller period of the time than was previously the case, a large current is allowed to flow through the heater element 14. Therefore, the heater element 14 now has a lower average power output, i.e. it is operating in a low power output mode.

In this particular example, the selector switch 34 is controlled by the operation of the timer 36. However, the selector switch 34 could be controlled by a detection signal from a heat sensor disposed in the interior of the cylindrical container 11.

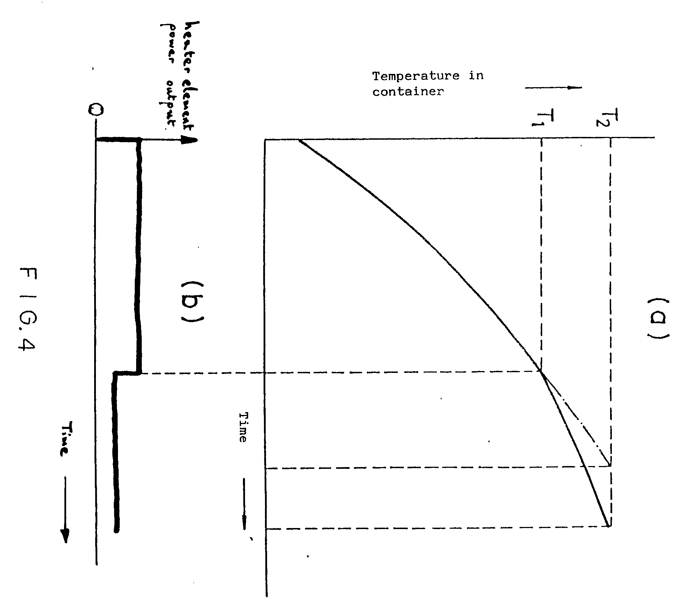

As described above, the power output of the heater element 14 used to roast the coffee beans is controlled by altering the period of the time during which a large current is allowed to flow through the heater element, and is maintained at a high level during the initial stage of the roasting operation. In this way, the temperature in the cylindrical container 11 is quickly raised to an appropriate roasting temperature $T_1$ (see Figure 4(a)) and the coffee beans are very quickly being roasted at a high rate. Thus, the flavour of the coffee beans is not lost. Also, after the temperature in the cylindrical container has been raised to the appropriate roasting temperature $T_1$, the power output of the heater element is reduced, and the temperature in the cylindrical container then increases more slowly to thereby prevent undesirably high temperatures within the cylindrical container. As a result of this, burning of the skin of the coffee beans is prevented. Figure 4(a) shows, with a dash-dot line, how the temperature would rise if the power output of the heater element were not reduced, and the solid line shows how the reduction means that it takes longer to reach a temperature level $T_2$ from the temperature level $T_1$. Furthermore, Figure 4(b) shows how the power output of the heater element is reduced after the predetermined time period. Fine control of the temperature in the cylindrical container is achieved by controlling the operation of the blower fan.

Figure 5 shows an example of an air flow control circuit 40 in accordance with the second aspect of the present invention for use in a roasting apparatus of the type just described. In this example, a blower motor 231 for the blower fan 23, which is disposed in the blower duct to cause the circulation of hot air within the cylindrical container to encourage uniform roasting of the coffee beans and to control the temperature in the container, has its rotational speed controlled by the air flow control circuit 40.

The air flow control circuit 40 comprises a rotation frequency detection sensor 41; a frequency to voltage conversion circuit 42 which converts the rotation frequency signal from the sensor 41 to a D.C. output voltage signal; a reference voltage generating circuit 43; a differential amplifier circuit 44 and a speed control circuit 45, to which the blower motor 231 is connected. The rotation frequency detection sensor 41 is disposed on the outside of the blower fan 23 to detect the rotation frequency of the fan, and it inputs its detection signal to the conversion circuit 42. The D.C. voltage signal generated by the conversion circuit 42 is inputted to the speed control circuit 45.

The differential amplifier circuit 44 is connected (as shown diagrammatically in Figure 5) to a parallel combination of the A.C. power source 30 and heater element 14, and is also connected to the reference voltage generating circuit 43. The A.C. power source 30 may be connected to the heater element 14 in the manner shown in Figure 2. The differential amplifier circuit 44 detects the difference between the input voltages applied from the A.C. power source 30 and the reference voltage generating circuit 43, and amplifies this difference. The amplified signal generated by the amplifier circuit 44 is inputted to the speed control circuit 45 to control the rotation frequency of the blower motor 231.

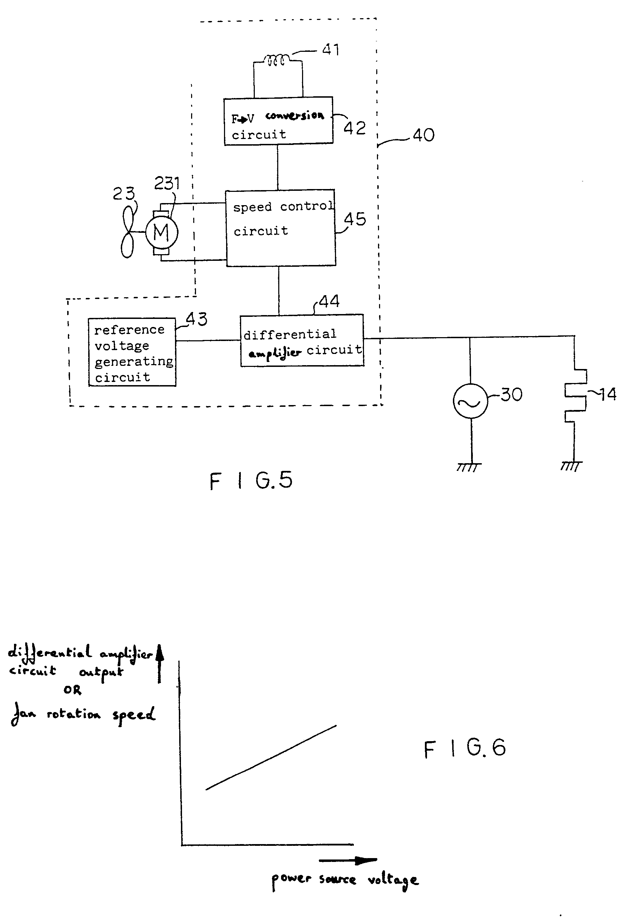

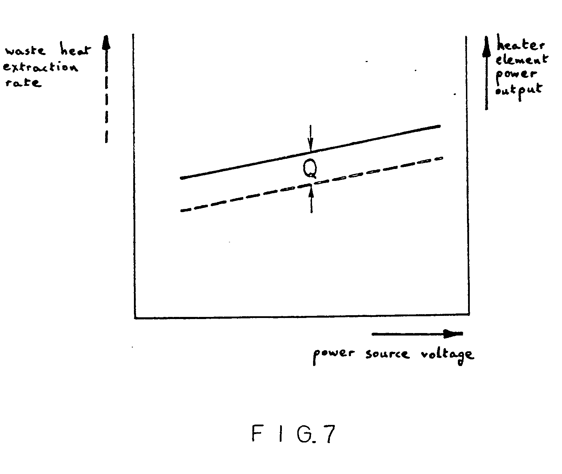

The operation of the air flow control circuit 40 will now be explained with reference to Figures 6 and 7. If the power source voltage applied to the heater element 14 exceeds the reference voltage generated by the reference voltage generating circuit 43 (i.e. the power output of the heater element 14 is being increased as the power source voltage increases), the differential amplifier circuit 44 amplifies the voltage difference between the two voltages and its output is inputted into the speed control circuit 45, where it sets the desired speed of rotation of the blower fan 23. In this example, the amplified voltage difference is proportional to the power source voltage (see Figure 6), and so is the desired speed of rotation of the fan 23. The actual speed of rotation of the blower fan 23, as represented by the output of the frequency to voltage conversion circuit 42, is compared in the speed control circuit 45 with the desired speed of rotation and, because the former will be less than the latter in the present situation, the output of the speed control circuit 45 will be increased to increase the speed of rotation of the fan to the desired level. Thus, the speed of rotation of the fan 23 is increased in response to increases in the power source voltage. Conversely, the speed of rotation is decreased in response to decreases in the power source voltage.

With this arrangement, the relationship between the power source voltage, the rotational speed of the fan, the mass flow rate of air moved by the fan and the rate of extraction of waste heat by the air flow from the container is that the following parameter is proportional to the preceding parameter. Thus, the waste heat extraction rate is proportional to the power source voltage, as shown by the dotted line in Figure 7. The power output of the heater element 14 is also proportional to the power source voltage (as shown by the continuous line in Figure 7) and hence, even if the power output is increased due to an increase in the voltage of the power source, the waste heat extraction rate is also increased proportionally. As a result, the net rate of heat supply Q to the coffee beans to effect the roasting operation is usually constant, as shown in Figure 7. Thus, if the power output of the heater element 14 is decreased, the waste heat extraction rate is also proportionally decreased. Therefore, the net heating effect of the heater element 14 is independent of the power source voltage.

The air flow control circuit controls the rotational speed of the blower motor in order that changes in the power source voltage can be compensated for. The net rate of heat supply to the coffee beans is thus maintained constant and optimum roasting conditions can be provided irrespective of the value of, or fluctuations in the value of, the power source voltage.

**Claims**

1. A coffee roasting apparatus (10) comprising a container (11) for holding coffee beans during a roasting operation, a heater element (14) for roasting the coffee beans, a fan (23) for circulating air within the container (11), and a control device for reducing the power output of the heater element (14) when, in use, the beans have been raised to a roasting temperature; characterised in that the control device comprises a selector switch (34) arranged to switch between a pair of parallel connected resistors (32, 33), a capacitor (36) connected to a trigger element (37) and to the ends of the resistors (32, 33) remote from the selector switch (34) and a switching element (38) controlled by the trigger element (37).

2. A coffee roasting apparatus according to claim 1, wherein the control device is arranged to effect the reduction in heater element power output a predetermined period of time after the start of the roasting operation.

3. A coffee roasting apparatus according to claim 2, wherein the selector switch (34) is controlled by a timer device (35).

4. A coffee roasting apparatus according to claim 1, wherein the selector switch (34) is controlled by a heat sensor which detects the temperature in the interior of the container (11).

5. A coffee roasting apparatus according to any one of the preceding claims further comprising an air flow control circuit (40) for increasing and decreasing the speed of rotation of the fan (23) upon an increase and decrease, respectively, in the voltage of a power source (30) used to power the heater element (14).

6. A coffee roasting apparatus according to claim 5, wherein the air flow control circuit (40) comprises a rotation frequency detection sensor (41), a frequency to voltage conversion circuit (42), a reference voltage generating circuit (43), a differential amplifier circuit (44) and a speed control circuit (45) to which a fan motor (231) is connected.

**Patentansprüche**

1. Kaffeeröstapparat (10) mit einem Behälter (11) zum Aufnehmen von Kaffeebohnen während einer Rösttätigkeit, einem Heizelement (14) zum Rösten der Kaffeebohnen, einem Ventilator (23) zum Umwälzen von Luft innerhalb des Behälters (11) und einer Steuereinrichtung zum Verringern der Leistungsabgabe des Heizelementes (14), wenn bei der Benutzung die Bohnen auf eine Rösttemperatur angehoben sind, dadurch gekennzeichnet, daß die Steuereinrichtung einen Auswahlschalter (34), der zum Schalten zwischen einem Paar von parallel verbundenen Widerständen (32, 33) angeordnet ist, einen Kondensator (36), der mit einem Auslöseelement (37) verbunden ist und mit den Enden der Widerstände (32, 33) auf der dem Auswahlschalter (34) abgewandten Seite, und ein durch das Auslöseelement (37) gesteuertes Schaltelement (38) aufweist.

2. Kaffeeröstapparat nach Anspruch 1, bei dem die Steuereinrichtung so ausgelegt ist, daß die Abnahme der Heizelementleistungsabgabe eine vorbestimmte Zeitdauer nach dem Start der Rösttätigkeit bewirkt wird.

3. Kaffeeröstapparat nach Anspruch 2, bei dem der Auswahlschalter (34) durch eine Zeitgebereinrichtung (35) gesteuert ist.

4. Kaffeeröstapparat nach Anspruch 1, bei dem der Auswahlschalter (34) durch einen Wärmesensor gesteuert ist, der die Temperatur im Inneren des Behälters (11) erfaßt.

5. Kaffeeröstapparat nach einem der vorhergehenden Ansprüche mit einer Luftflußsteuerschaltung (40) zum Erhöhen und Erniedrigen der Drehgeschwindigkeit des Ventilators (23) auf das Ansteigen bzw. Absinken der Spannung einer Spannungsversorgung (30), die zum Betreiben des Heizelementes (14) benutzt ist.

6. Kaffeeröstapparat nach Anspruch 5, bei dem die Luftflußsteuerschaltung (40) einen Rotationsfrequenzerfassungssensor (41), eine Frequenzspannungswandlerschaltung (42), eine Bezugsspannungserzeugerschaltung (43), eine Differentialverstärkerschaltung (44) und eine Geschwindigkeitssteuerschaltung (45) aufweist, mit der ein Ventilatormotor (231) verbunden ist.

**Revendications**

1. Appareil de torréfaction de café (10) comprenant un récipient (11) destiné à contenir les grains de café pendant une opération de torréfaction, un élément de chauffage (14) destiné à torréfier les grains de café, un ventilateur (23) destiné à faire circuler l'air à l'intérieur du récipient (11), et un dispositif de commande destiné à réduire la puissance de sortie de l'élément de chauffage (14) lorsque, en cours d'utilisation, les grains de café ont été amenés à la température de torréfaction; appareil caractérisé en ce que le dispositif de commande comprend un commutateur-sélecteur (34) monté de manière à effectuer une commutation entre une paire de résistances branchées en parallèle (32, 33), un condensateur (36) branché à un élément de déclenchement (37) et aux extrémités des résistances (32, 33) opposées au commutateur-sélecteur (34), et un élément de commutation (38) commandé par l'élément de déclenchement (37).

2. Appareil de torréfaction de café selon la revendication 1, caractérisé en ce que le dispositif de commande est conçu pour effectuer la réduction de la puissance de sortie de l'élément de chauffage au bout d'une période de temps prédéterminée après le démarrage de l'opération de torréfaction.

3. Appareil de torréfaction de café selon la revendication 2, caractérisé en ce que le commutateursélecteur (34) est commandé par un dispositif d'horloge (35).

4. Appareil de torréfaction de café selon la revendication 1, caractérisé en ce que le commutateursélecteur (34) est commandé par un détecteur de chaleur qui détecte la température à l'intérieur du récipient (11).

5. Appareil de torréfaction de café selon l'une quelconque des revendications précédentes, caractérisé en ce qu'il comprend en outre un circuit de commande de débit d'air (40) destiné à augmenter et diminuer la vitesse de rotation du ventilateur (23) lorsque se produisent respectivement une augmentation et une diminution de la tension d'une source de puissance (30) utilisée pour alimenter l'élément de chauffage (14).

6. Appareil de torréfaction de café selon la revendication 5, caractérisé en ce que le circuit de commande de débit d'air (40) comprend un détecteur de fréquence de rotation (41), un circuit de conversion fréquence-tension (42), un circuit générateur de tension de référence (43), un circuit d'amplificateur différentiel (44) et un circuit de commande de vitesse (45) auquel est branché un moteur de ventilateur (231).

F I G. 1

F I G.2

F I G. 3

## (a)

## (b)

F I G. 4

41

F→V conversion circuit 42

40

23 231

M

speed control circuit 45

44

reference voltage generating circuit 43

differential amplifier circuit

30

14

F I G.5

differential amplifier circuit output

OR

fan rotation speed

power source voltage

F I G.6

waste heat extraction rate

heater element power output

Q

power source voltage

F I G. 7